# EUROPÄISCHE PATENTSCHRIFT

(11) **EP 0 937 970 B1**
(45) Veröffentlichungstag und Bekanntmachung des Hinweises auf die Patenterteilung: **17.06.2009**
(21) Anmeldenummer: 99103182.4
(22) Anmeldetag: 18.02.1999
(51) Int. Cl.: G01H 3/08, G01H 1/00

(54) **Vorrichtung und Verfahren zur Analyse von Signalen**
Apparatus and method for signal analysis
Dispositif et procédé d'analyse de signaux

(30) Priorität: 18.02.1998 DE 19806782
(43) Veröffentlichungstag der Anmeldung: 25.08.1999
(73) Patentinhaber: Prüftechnik Dieter Busch AG, 85737 Ismaning (DE)
(72) Erfinder: Lysen, Heinrich, 85748 Garching b. München (DE)

(56) Entgegenhaltungen:
- DE-A- 3 305 425
- US-A- 4 872 337
- US-A- 5 511 422
- PATENT ABSTRACTS OF JAPAN vol. 009, no. 030 (P-333), 8. Februar 1985 (1985-02-08) & JP 59 173720 A (NIPPON KOKAN KK), 1. Oktober 1984 (1984-10-01)

## Beschreibung

Die Erfindung betrifft eine Vorrichtung und ein Verfahren zur Analyse von Signalen. Solche können allgemeiner Form sein und insbesondere als eindimensionale Signale, speziell Zeitsignale vorliegen. Signale dieser Art leiten sich im Bereich der Technik zum Beispiel ab von Geräuschsignalen, wie sie durch laufende Maschinen hervorgerufen werden. Ein anderes Beispiel aus dem Bereich der Technik sind Signale, welche einen regulären Maschinenzustand repräsentieren, oder für einen kurzzeitig oder andauernd auftretenden Defekt charakteristisch sind. Solche Defekte können die Maschinen selbst betreffen, oder ein von einer solchen Maschine produziertes Produkt.

Es sind verschiedenste Verfahren der genannten Art bekannt. Sofern das Verhältnis zwischen einem interessierenden Signalanteil und einem Rauschanteil genügend gross ist, ist eine Analyse zumeist weniger schwierig. Von besonderem Interesse, und von erheblicher Schwierigkeit ist es jedoch, solche Signalanteile zu extrahieren, die durch ein Rauschen stark verfälscht sind. Ebenso ist es von besonderem Interesse, einzelne, oder nur kurzfristig oder sporadisch und möglicherweise stochastisch auftretende Signale zu identifizieren, wenn eine Vielzahl anderer Signale gleichzeitig vorhanden ist.

Beispielsweise ist es bekannt, dass es ausserordentlich schwierig ist, bei einer Maschine ein Lagergeräusch zu identifizieren, wenn das Signal/-Rauschverhältnis kleiner wird als ein Wert von etwa 0,25 (vgl. British. Journ. of NDT, Vol 35 No. 10 p. 574ff). Der Einsatz von herkömmlichen Fourier-Analysen ist in einem solchen Fall annähernd wirkungslos.

Es ist Aufgabe der Erfindung, eine Vorrichtung und ein zugehöriges Verfahren anzugeben, durch welche insbesondere eine verbesserte, wirkungsvollere Analyse oder Detektion zur Erkennung von solchen Signalanteilen möglich ist, die sich durch jeweils nur kurze zeitliche Präsenz auszeichnen. Das erfindungsgemässe Verfahren kann darüberhinaus beispielsweise zur Erkennung stark verrauschter Signale herangezogen werden.

Die genannte Aufgabe wird mit den Mitteln der unabhängigen Ansprüche gelöst. Weitere vorteilhafte Ausgestaltungen der Erfindung ergeben sich aus den Unteransprüchen.

Die Erfindung beruht auf der Erkenntnis, dass ein abgetastetes, zumeist in digitalisierter Form vorliegendes Zeitsignal als eine geordnete Menge individueller Einzelereignisse aufzufassen ist, deren innere Korrelationen zunächst unbekannt sind. Die Erfindung beruht weiter auf der Erkenntnis, dass die Ergebnisse herkömmlicher, an sich bekannter Korrelations-Analysen dadurch ergänzt und verbessert werden können, indem man darauf verzichtet, zeitlich gegeneinander verschobene Abschnitte solcher Signale miteinander zu verknüpfen. Vielmehr wird gemäss der Erfindung jedes Einzelereignis (gemäss obiger Definition) eines zu betrachtenden Signals zumindest einmal mit einem oder mehreren anderen Einzelereignissen verknüpft, und die Resultate der einzelnen Verknüpfungen werden einer Klassifikation zugeführt. Insbesondere ist es gemäss der Erfindung von Interesse, zur Klassifikation eine solche nach Art einer summativ gebildeten Häufigkeitsverteilung vorzusehen. Die Abszisse einer derartigen Häufigkeitsverteilung ist dabei bevorzugt nach Zeitklassen geordnet. Die einzelnen Zeitklassen entsprechen Zeitdifferenzen, so dass die Resultate der einzelnen Verknüpfungen anhand der zugrundeliegenden Zeitdifferenzen in die Häufigkeitsverteilung eingeordnet werden können. Zum Verknüpfen der Ereignisse ist es von Vorteil, jeweils Multiplikationen durchzuführen. Es können zu diesem Zweck aber auch andere zweiwertige Verknüpfungen angewendet werden, insbesondere Summenbildung und Maximumsbildung. Gemäss einer bevorzugten Vorgehensweise der Erfindung ist vorgesehen, jedes Ereignis mit allen seinen Vorgängern zu verknüpfen, oder mit denjenigen Vorgängern, welche sich in seiner näheren oder unmittelbaren Nachbarschaft befinden. Gemäss einer anderen Vorgehensweise der Erfindung ist vorgesehen, jedes Ereignis mit jedem anderen zu verknüpfen und die Verknüpfungsergebnisse ebenfalls einer Klassifizierung zuzuführen.

Die mittels einer Häufigkeitsanalyse erhaltenen Klassifikationsergebnisse können gemäss der Erfindung entweder direkt ausgewertet werden oder einer zusätzlichen Analyse zugeführt werden. Hierbei ist es insbesondere nützlich, diejenigen Extremwerte einer resultierenden Häufigkeitsverteilung durch eine Abbildungsvorschrift zu normieren, welche als ganzzahlige Vielfache eines ersten Extremwertes aufzufassen sind. Ein solcher erster Extremwert gehört dabei also zu einer Zeitklasse der Häufigkeitsverteilung, die durch einen kleineren (Differenz-)Zeitwert gekennzeichnet ist, als die Zeitklassen der ganzzahligen Vielfachen des ersten Extremwertes.

Bei der direkten Auswertung der erhaltenen Klassifikationsergebnisse kann es genügen, die Funktionswerte einzelner Zeitklassen in Bezug auf einen vordefinierten Schwellwert zu überprüfen. Eine andere direkte Auswertung besteht beispielsweise darin, beobachtete Extremwerte, insbesondere Maxima, einer erhaltenen Häufigkeitsverteilung zu überprüfen. Auch dabei kann insbesondere ein Vergleich mit vordefinierten Schwellwerten durchgeführt werden. Das Ergebnis solcher Vergleiche liefert dann die gewünschte Aussage, ob repetitiv auftretende Signalanteile eines "verrauschten" Signals als detektiert gelten können oder nicht.

In einer zusätzlichen Art der Auswertung wird gemäss der Erfindung eine resultierende Häufigkeitsverteilung z.B. mittels einer Fourier-Transformation aus dem Zeit- in den Frequenzbereich transformiert. Auf diese Weise ist es möglich, sich einen Überblick darüber zu verschaffen, ob und wenn ja welche Werte einer erhaltenen Häufigkeitsverteilung als zeitlich multiple Vielfache vorliegen, etwa nach Art einer sogenannten "Cepstrum"-Analyse.

Die Erfindung wird im folgenden anhand der Zeichnung beschrieben.

Es zeigt:
- Fig. 1: ein Zeitsignal mit diskreten, positiv definiten Abtastwerten
- Fig. 2: eine Häufigkeitsverteilung von Verknüpfungsergebnissen, basierend auf einer Mehrzahl von Abtastwerten

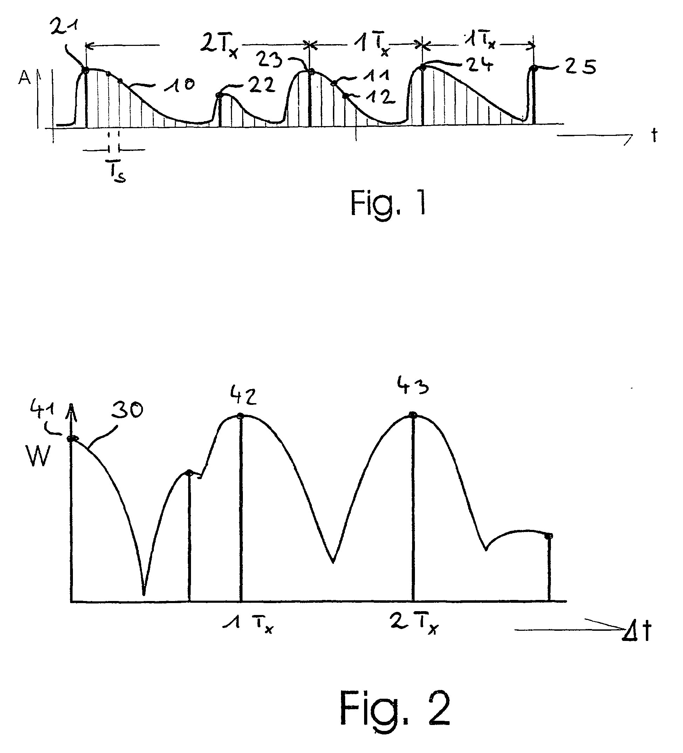

Das in Fig. 1 gezeigte Zeitsignal 10 liegt entweder von sich aus in positiv definiter Form vor. Sofern diese Voraussetzung nicht gegeben ist, können entweder nur positive oder nur negative Signalanteile betrachtet werden. Erfindungsgemäss von besonderer Bedeutung ist es, ein Zeitsignal gegebenenfalls durch Betragsbildung oder Quadrierung positiv definit zu machen.

Das Zeitsignal 10 wird zur weiteren Verarbeitung durch einzelne Abtastwerte (z.B. 11, 12) dargestellt. Hierzu wird in an sich bekannter Weise ein Analog-Digital-Wandler (ADC) vorgesehen, welcher das Zeitsignal mit einer bevorzugt konstanten Abtastzeit Tₛ abtastet und digitalisiert. Von besonderem Interesse, insbesondere bei der Beurteilung von Maschinengeräuschen oder bei der Qualitätsanalyse von kontinuierlich hergestellten Produkten, sind mehr oder weniger regelmässig in Erscheinung tretende Ereignisse 21, 22, 23, 24, 25. Diese unterscheiden sich durch ihre zeitliche Differenz und auch durch unterschiedliche Intensitätswerte (Ordinate A). Im gezeigten Beispiel treten die mit 1 Tₓ und 2 Tₓ gekennzeichneten zeitlichen Differenzwerte besonders hervor. Wichtig ist, dass die zugehörigen relativ grossen Intensitätswerte gemäss der erfindungsgemässen Verknüpfung mit nachfolgender Klassifikation besonders grosse Summations-Anteile liefern sollen. Dies gilt insbesondere bei einer Verknüpfung multiplikativer Art.

Die Erfindungsgemäss vorgeschlagene Signalanalyse funktioniert daher anders als herkömmliche Verfahren. Dies beruht auf folgender Überlegung: Wenn impulsartige Signalanteile von kurzer Dauer, aber im Vergleich zum Rauschpegel relativ hoher Amplitude auftreten, so sind diese Signalanteile von besonderer Bedeutung, d.h. hohem Informationsgehalt. Sie werden mittels erhöhter Bewertungsfaktoren und somit in nichtlinearer Weise dem weiteren Analyseverfahren zugeführt. Demzufolge ist es erforderlich, zunächst auf geeignete Weise die genannten impulsartigen Signalanteile zu identifizieren. Dies kann zum Beispiel durch eine Erkennung von Spitzenwerten erfolgen, welche oberhalb eines vordefinierbaren Schwellwertes gesichtet werden. Werden die Impulshöhen von zwei solcher Spitzenwerte miteinander multipliziert, so wird in nichtlienarem Masse eine Bewertung des Informationsgehaltes dieser beiden Spitzenwerte durchgeführt. Der entsprechende Wert eines so ermittelten Produktes geht gemäss der Erfindung dann mit erhöhtem Anteil in eine Häufigkeitsverteilung ein, welche nach Zeitdifferenzen klassifiziert. In einer direkten Vorgehensweise werden daher die genannten Produktwerte einer solchen Zeitdifferenz-Klasse zugeordnet, welche der Zeitdifferenz von zwei gerade betrachteten impulsartiger Spitzenwerte des zu analysierenden und zumeist verrauschten Signals entspricht.

Dieser Sachverhalt wird in Fig. 2 wiedergegeben. Die Abszisse der Darstellung entspricht einem Zeitmass. Genauer gesagt, werden durch die Abszisse Zeitdifferenzen "delta t" spezifiziert. Über diese Zeitdifferenzen ist eine Häufigkeit W(Δt) angegeben. Eine zu einer Zeitdifferenz Δt eingetragene Häufigkeit beruht, wie obig beschrieben, zum Beispiel auf der Summe aller aufgefundenen Produktterme, denen eine entsprechend grosse Zeitdifferenz zugrundeliegt. Anstelle einer Aufsumierung kam auch ein jeweiliger Häufigkeitswert für einen Wert von Δt dadurch ermittelt werden, dass ein incrementelles Voranschreiten, nach Art einer Strichliste, vorgesehen wird. Eine durch multiplikative Verknüpfung mit nachfolgend summativ aufgefundenem Häufigkeitswert ermittelte Häufigkeitsverteilung wird durch Bezugsziffer 30 angegeben. Für Zeitdifferenzen mit dem Wert 1 * Tₛ ergeben sich naturgemäss besonders grosse Häufigkeitswerte 41. Weitere besonders hervortretende Häufigkeitswerte 42, 43 für die Differenz-zeiten 1* Tₓ und 2*Tₓ beruhen darauf, dass die grossen Intensitäten in der Nähe der zeitlichen Ereignisse 21, 22, 23, 24, 25 durch paarweise Produktbildung zu entsprechend grossen Anteilen der Häufigkeitswerte führt.

## Patentansprüche

1. Vorrichtung zur Analyse von an Maschinen oder Produktionsanlagen auftretenden Zeitsignalen,
mit einer Abtasteinrichtung zur Erstellung von Abtastwerten eines Signals, und zur Digitalisierung eines solchen Signals, **gekennzeichnet durch** folgende Merkmale:
eine Verknüpfungseinheit, welche jedes Ereignis (11, 12) eines Signals (21) mit einer Vielzahl oder allen Ereignissen (11, 12) des genannten Signals (21) miteinander verknüpft, wobei jedes Ereignis ein relatives Maximum des Signals ist
eine Klassifikationseinheit, die die Verknüpfungsergebnisse nach Art einer Häufigkeitsverteilung anhand von Zeitdifferenzen zwischen Ereignissen klassifiziert
und eine Auswertungseinheit, die das Ergebnis der Klassifikationeinheit auswertet.

2. Verfahren zur Durchführung auf einer Vorrichtung nach Anspruch 1,
**dadurch gekennzeichnet, dass** die Verknüpfung in der Verknüpfungseinheit gemäss einer zwei- oder mehrwertigen Relation vorgenommen wird, insbesondere durch Produktbildung, Summenbildung oder Maximumsbildung von zwei oder mehr Termen, insbesondere von zwei oder mehr relativer Maxima eines Signals (21)

3. Verfahren zur Durchführung auf einer Vorrichtung nach Anspruch 1, wobei
in der Klassifikationseinheit und /oder der Auswertungseinheit ein signifikanter Häufigkeitswert ermittelt wird,
ganzzahlige Vielfache eines Zeitdifferenzwertes, welcher einem solchen signifikanten Häufigkeitswert zugeordnet ist, ermittelt werden,
Häufigkeitswerte solcher ganzzahligen Vielfache von Zeitdifferenzwerten ermittelt werden, und die so ermittelten Häufigkeitswerte bewertet werden.

4. Vorrichtung nach Anspruch 1 zur Erkennung oder zur Analyse von Maschinenschäden, insbesondere zur Erkennung von Fehlern an Wälzlagern.

5. Verzehren nach Anspruch 2 oder 3 zur Erkennung oder zur Analyse von Maschinenschäden, insbesondere zur Erkennung von Fehlern an Wälzlagers.

6. Vorrichtung nach Anspruch 1 zur Erkennung oder zur Analyse von Defekten an maschinell hergestellten Produkten, insbesondere an kontinuierlich hergestellten Produkten.

7. Verfahren nach Anspruch 2 oder 3 zur Erkennung oder zur Analyse von Defekten an maschinell hergestellten Produkten, insbesondere an kontinuierlich hergestellten Produkten.

## Claims

1. Apparatus for analysing time signals which occur in machines or production installations,
having a sampling device for creating samples of a signal and for digitizing such a signal, **characterized by** the following features:
a combination unit which combines each event (11, 12) of a signal (21) with a multiplicity of events or all events (11, 12) of said signal (21), each event being a relative maximum of the signal,
a classification unit which classifies the combination results in the manner of a frequency distribution using time differences between events,
and an evaluation unit which evaluates the result from the classification unit.

2. Method which is intended to be carried out on an apparatus according to Claim 1,
**characterized in that** the combination in the combination unit is carried out according to a relationship involving two or more values, in particular by forming the product, the sum or the maximum of two or more terms, in particular of two or more relative maxima of a signal (21).

3. Method which is intended to be carried out on an apparatus according to Claim 1,
a significant frequency value being determined in the classification unit and/or the evaluation unit,
integer multiples of a time difference value associated with such a significant frequency value being determined,
frequency values of such integer multiples of time difference values being determined,
and the frequency values determined in this manner being assessed.

4. Apparatus according to Claim 1 for detecting or analysing machine damage, in particular for detecting faults on rolling bearings.

5. Method according to Claim 2 or 3 for detecting or analysing machine damage, in particular for detecting faults on rolling bearings.

6. Apparatus according to Claim 1 for detecting or analysing defects on mechanically produced products, in particular on continuously produced products.

7. Method according to Claim 2 or 3 for detecting or analysing defects on mechanically produced products, in particular on continuously produced products.

## Revendications

1. Dispositif d'analyse de signaux temporels survenant sur des machines ou des installations de production, comportant un dispositif d'échantillonnage pour établir des valeurs d'échantillonnage d'un signal et pour numériser un tel signal, **caractérisé par** les caractéristiques suivantes:
une unité de combinaison, qui combine chaque résultat (11,12) d'un signal (21) avec une pluralité ou tous les résultats (11,12) dudit signal (21), chaque résultat étant un maximum relatif du signal, et
une unité de classification, qui classifie les résultats de combinaison à la manière d'une distribution de fréquence sur la base des différences temporelles entre les résultats,
et une unité d'évaluation, qui évalue le résultat de l'unité de classification.

2. Procédé à mettre en oeuvre sur un dispositif selon la revendication 1, **caractérisé en ce que** la combinaison dans l'unité de combinaison est entreprise selon une relation bivalente ou plurivalente, notamment par formation de produit, formation de somme ou formation de maximum de deux ou plusieurs termes, notamment de deux ou plus maxima relatifs d'un signal (21).

3. Procédé à mettre en oeuvre sur un dispositif selon la revendication 1, dans lequel dans l'unité de classification et/ou l'unité d'évaluation une valeur de fréquence significative est déterminée, des multiples à nombre entier d'une valeur de différence temporelle, qui est coordonnée à une telle valeur de fréquence significative, sont déterminés, des valeurs de fréquence de tels multiples à nombre entier des valeurs de différence temporelle sont déterminées et les valeurs de fréquence ainsi déterminées sont évaluées.

4. Dispositif selon la revendication 1 de reconnaissance ou d'analyse de détériorations de machines, notamment pour reconnaître des défauts sur des paliers à roulements.

5. Procédé selon la revendication 2 ou 3 de reconnaissance ou d'analyse de détériorations de machines, notamment pour reconnaître des défauts sur des paliers à roulements.

6. Dispositif selon la revendication 1 de reconnaissance ou d'analyse des défauts sur des produits fabriqués à la machine, notamment sur des produits fabriqués en continu.

7. Procédé selon la revendication 2 ou 3 de reconnaissance ou d'analyse de défauts sur des produits fabriqués à la machine, notamment sur des produits fabriqués en continu.
